# EUROPÄISCHE PATENTSCHRIFT

(11) **EP 3 395 085 B1**
(45) Veröffentlichungstag und Bekanntmachung des Hinweises auf die Patenterteilung: **07.10.2020**
(21) Anmeldenummer: 16808596.7
(22) Anmeldetag: 01.12.2016
(51) Int. Cl.: H04W 4/80, H04W 76/14, H04W 84/18, H04W 8/00, H04L 29/08

(54) **VORRICHTUNGEN, VERFAHREN UND COMPUTERPROGRAMM ZUM HERSTELLEN EINER KOMMUNIKATIONSVERBINDUNG ZWISCHEN EINEM INFORMATIONSSYSTEM EINES FAHRZEUGS UND EINEM MOBILGERÄT**
DEVICES, METHODS AND COMPUTER PROGRAM FOR PRODUCING A COMMUNICATION LINK BETWEEN AN INFORMATION SYSTEM OF A VEHICLE AND A MOBILE DEVICE
DISPOSITIFS, PROCÉDÉS ET PROGRAMME INFORMATIQUE POUR ÉTABLIR UNE LIAISON DE COMMUNICATION ENTRE UN SYSTÈME D'INFORMATION D'UN VÉHICULE ET UN APPAREIL MOBILE

(30) Priorität: 23.12.2015 DE 102015226643
(43) Veröffentlichungstag der Anmeldung: 31.10.2018
(73) Patentinhaber: Volkswagen Aktiengesellschaft, 38440 Wolfsburg (DE)
(72) Erfinder: GERLACH, Simon, 38527 Meine (DE); PENSHORN, Gerd, 31234 Edemissen (DE)
(86) Internationale Anmeldenummer: PCT/EP2016/079501
(87) Internationale Veröffentlichungsnummer: WO 2017/108370

(56) Entgegenhaltungen:
- US-A1- 2014 227 979
- US-A1- 2015 024 688

## Beschreibung

Gemäß einem Aspekt der vorliegenden Offenbarung werden eine Vorrichtung, ein Verfahren und ein Computerprogramm bereitgestellt, wie sie in den unabhängigen Ansprüchen 1, 8 und 9 definiert sind.
Andere Aspekte der vorliegenden Offenbarung sind in den abhängigen Ansprüchen definiert.

Eine Verbindung von Mobilgeräten mit Informationssystemen von Fahrzeugen ist ein wichtiger Trend im Fahrzeugbau. Funktionen des Mobilgeräts, etwa die Darstellung von Navigationsinformationen oder das Abspielen von Musik oder anderen Medien können auf einen Bildschirm oder ein Lautsprechersystem des Fahrzeugs übertragen werden. Gleichzeitig kann das Mobilgerät dem Fahrzeug eine, möglicherweise breitbandige, Internetverbindung bereitstellen.

Dabei ist das Herstellen einer Verbindung zwischen dem Mobilgerät und dem Informationssystem für viele potentielle Benutzer eine Hürde, die die Nutzung der Verbindung erschweren kann. Eine kabelgebundene Verbindung herzustellen ist meist einfach möglich, da keine zusätzlichen Aktionen des Nutzers nötig sind. Das Herstellen einer kabellosen Verbindung, beispielsweise über Bluetooth oder ein kabelloses lokales Zugangsnetzwerk (auch engl. Wireless Local Access Network, WLAN), erfordert allerdings häufig ein aktives koppeln (auch engl. pairing) der Geräte, das in vielen Fällen eine Reihe an Schritten umfasst.

US-Patentanmeldung 2015/0024688 A1 offenbart ein Verfahren zum automatischen Koppeln von Mobilgeräten mit Fahrzeugen.

Es besteht ein Bedarf, ein verbessertes Konzept bereitzustellen, um eine Verbindung zwischen einem Mobilgerät mit einem Informationssystem eines Fahrzeugs herzustellen. Diesem Bedarf wird durch Vorrichtungen und Verfahren gemäß den unabhängigen Ansprüchen Rechnung getragen.

Ausführungsbeispiele können dies durch ein Übertragen/Synchronisieren von Hardware-Adressen der Mobilgeräte an ein oder mehrere Fahrzeuge erreichen. Entdeckt ein Informationssystem eines Fahrzeugs ein Mobilgerät, dessen Adresse bekannt ist, das aber bisher noch nicht mit dem Informationssystem gekoppelt ist, so initiiert es eine Kopplung des Fahrzeugs mit dem Mobilgerät, beispielsweise ohne dass eine weitere Benutzerinteraktion notwendig ist. Der Nutzer oder eine mobile Applikation für Mobilgeräte (auch engl. App, kurz für Application) kann die Kopplung dann auf dem Mobilgerät bestätigen.

Ausführungsbeispiele schaffen eine Vorrichtung für ein Informationssystem eines Fahrzeugs, zum Herstellen einer Kommunikationsverbindung mit einem Mobilgerät. Die Vorrichtung umfasst ein Kommunikationsmodul und ein Kontrollmodul. Das Kontrollmodul ist ausgebildet zum Steuern des Kommunikationsmoduls. Das Kontrollmodul ist ferner ausgebildet zum Erhalten von Information über eine Hardware-Adresse des Mobilgeräts. Das Kontrollmodul ist ferner ausgebildet zum Detektieren der Hardware-Adresse des Mobilgeräts über das Kommunikationsmodul basierend auf der Information über die Hardware-Adresse. Das Kontrollmodul ist ferner ausgebildet zum Initiieren einer Kopplung des Mobilgeräts mit dem Informationssystem basierend auf der Hardware-Adresse des Mobilgeräts. Das Kontrollmodul ist ferner ausgebildet zum Herstellen der Kommunikationsverbindung mit dem Mobilgerät basierend auf der Kopplung. Das Herstellen der Kommunikationsverbindung basierend auf der Hardware-Adresse kann einen Kopplungsprozess vereinfachen und eine vereinfachte Nutzung des Mobilgeräts über mehrere Fahrzeuge hinweg ermöglichen.

In zumindest einigen Ausführungsbeispielen kann das Kommunikationsmodul zumindest zwei Sende-Empfangsmodule umfassen. Das Erhalten der Information über die Hardware-Adresse und die Kommunikationsverbindung mit dem Mobilgerät können auf unterschiedlichen Sende-Empfangsmodulen der zumindest zwei Sende-Empfangsmodule basieren. Durch eine Übertragung der Information über die Hardware-Adresse über ein von dem für den Aufbau der Kommunikationsverbindung genutzte Sende-Modul verschiedenes Sende-Modul kann ein Übertragen der Information über die Hardware-Adresse unabhängig vom Mobilgerät, beispielsweise über eine Internetverbindung des Fahrzeugs, ermöglicht werden.

In manchen Ausführungsbeispielen ist das Kommunikationsmodul ausgebildet, um in einem Netzwerk zu kommunizieren. Das Kontrollmodul kann ausgebildet sein, um die Information über die Hardware-Adresse von einem Server im Netzwerk zu erhalten. Das Übertragen der Information über die Hardware-Adresse über einen Server kann eine asynchrone Übertragung der Information über die Hardware-Adresse und/oder eine Akkumulation von Hardware-Adressen im Server ermöglichen.

In zumindest manchen Ausführungsbeispielen ist das Kontrollmodul ausgebildet, die Information über die Hardware-Adresse von einem weiteren Fahrzeug über den Server zu erhalten. Ein Erhalten der Information über die Hardware-Adresse von einem weiteren Fahrzeug ermöglicht einen vereinfachten Verbindungsaufbau über mehrere Fahrzeuge hinweg.

In einigen Ausführungsbeispielen ist das Kontrollmodul ausgebildet, um die Information über die Hardware-Adresse von dem Mobilgerät über den Server zu erhalten. Dies ermöglicht eine vereinfachte Kopplung, etwa durch Übertragen der Hardware-Adresse durch eine App eines Fahrzeugherstellers für eine vereinfachte Kopplung.

In zumindest einigen Ausführungsbeispielen ist das Kontrollmodul ausgebildet, Information über ein oder mehrere Hardware-Adressen von mit dem Informationssystem gekoppelten Mobilgeräten zu bestimmen und dem Server bereitzustellen. Ein Bereitstellen der Information über die ein oder mehreren Hardware-Adresse von einem weiteren Fahrzeug ermöglicht einen vereinfachten Verbindungsaufbau über mehrere Fahrzeuge hinweg.

In zumindest manchen Ausführungsbeispielen entspricht die Hardware-Adresse einer Wireless Local Access Network, WLAN, Medium Access Control, MAC,-Adresse, oder einer Bluetooth-MAC-Adresse. Dies ermöglicht eine vereinfachte Kopplung über Bluetooth bzw. WLAN.

In einigen Ausführungsbeispielen ist das Kommunikationsmodul ausgebildet, über ein Kommunikationsprotokoll mit dem Mobilgerät zu kommunizieren. Das Kontrollmodul kann ausgebildet sein, die Kopplung zu initiieren, falls das Kommunikationsmodul nicht mit einem weiteren Mobilgerät über das Kommunikationsprotokoll eine Kommunikationsverbindung hergestellt hat. Ein Herstellen der Kommunikationsverbindung wenn das Kommunikationsmodul gerade keine Kommunikationsverbindung mit keinem anderen Mobilgerät hergestellt hat, kann ermöglichen, dass jeweils ein Mobilgerät verbunden ist.

In manchen Ausführungsbeispielen ist das Kontrollmodul ausgebildet, um basierend auf der Information über die Hardwareadresse zu bestimmen, ob das Informationssystem mit dem Mobilgerät gekoppelt ist. Das Kontrollmodul kann ausgebildet sein, um die Kopplung basierend darauf zu initiieren, ob das Informationssystem mit dem Mobilgerät gekoppelt ist. Ist eine Kopplung schon vorhanden, so kann das Kontrollmodul die Kommunikationsverbindung herstellen, ansonsten kann das Kontrollmodul ausgebildet sein, die Kopplung zu initiieren, und beispielsweise Kommunikationsschlüssel auszutauschen.

In zumindest einigen Ausführungsbeispielen ist das Kontrollmodul ausgebildet, um Information über ein oder mehrere Hardware-Adressen zu erhalten. Die Hardware-Adresse des Mobilgeräts kann in der Information über die ein oder mehreren Hardware-Adressen umfasst sein. Das Kontrollmodul kann ausgebildet sein, um die Hardware-Adresse des Mobilgeräts basierend auf der Information über die ein oder mehreren Hardware-Adressen zu detektieren. Das Detektieren kann eine Initiierung einer Kopplung und/oder eines Verbindungsaufbaus ermöglichen.

Ausführungsbeispiele schaffen ferner eine Vorrichtung für einen Server in einem Netzwerk, zum Bereitstellen von Information über eine Hardware-Adresse eines Mobilgeräts für ein Fahrzeug. Die Vorrichtung umfasst ein Kommunikationsmodul und ein Kontrollmodul. Das Kontrollmodul ist ausgebildet zum Erhalten der Information über die Hardware-Adresse des Mobilgeräts von dem Mobilgerät oder von einem weiteren Fahrzeug über das Kommunikationsmodul. Das Kontrollmodul ist ferner ausgebildet zum Speichern der Information über die Hardware-Adresse in einem Speichermodul. Das Kontrollmodul ist ferner ausgebildet zum Bereitstellen der Information über die Hardware-Adresse des Mobilgeräts für das Fahrzeug über das Kommunikationsmodul. Das Bereitstellen der Information über die Hardware-Adresse ermöglicht eine vereinfachte Kopplung eines Informationssystems eines Fahrzeugs mit einem Mobilgerät, basierend auf dessen Hardware-Adresse.

In einigen Ausführungsbeispielen ist das Kontrollmodul ausgebildet, um Information über ein oder mehrere Hardware-Adressen von ein oder mehreren Mobilgeräten von den ein oder mehreren Mobilgeräten und/oder dem weiteren Fahrzeug zu erhalten. Die Information über die ein oder mehreren Hardware-Adressen kann die Hardware-Adresse des Mobilgeräts umfassen. Das Kontrollmodul kann ausgebildet sein, um die Information über die ein oder mehreren Hardware-Adressen in dem Speichermodul zu speichern. Das Kontrollmodul kann ausgebildet sein, um die Information über die ein oder mehreren Hardware-Adressen dem Fahrzeug bereitzustellen. Ein Bereitstellen der Information über die ein oder mehreren Hardware-Adresse von einem weiteren Fahrzeug ermöglicht einen vereinfachten Verbindungsaufbau über mehrere Fahrzeuge hinweg.

Ausführungsbeispiele schaffen ferner eine Vorrichtung für ein Mobilgerät, zum Bereitstellen von Information über eine Hardware-Adresse des Mobilgeräts für ein Informationssystem eines Fahrzeugs über einen Server in einem Netzwerk. Die Vorrichtung umfasst ein Kommunikationsmodul und ein Kontrollmodul. Das Kontrollmodul ist ausgebildet zum Bestimmen der Information über die Hardware-Adresse basierend auf der Hardware-Adresse des Mobilgeräts. Das Kontrollmodul ist ferner ausgebildet zum Bereitstellen der Information über die Hardware-Adresse für den Server über das Kommunikationsmodul. Ein Bereitstellen der Information über die Hardware-Adresse ermöglicht einen vereinfachten Verbindungsaufbau, beispielsweise durch ein Fahrzeug.

Ausführungsbeispiele schaffen ferner ein Verfahren für ein Informationssystem eines Fahrzeugs, zum Herstellen einer Kommunikationsverbindung mit einem Mobilgerät. Das Verfahren umfasst Erhalten von Information über eine Hardware-Adresse des Mobilgeräts. Das Verfahren umfasst ferner Detektieren der Hardware-Adresse des Mobilgeräts basierend auf der Information über die Hardware-Adresse. Das Verfahren umfasst ferner Initiieren einer Kopplung des Mobilgeräts 200 mit dem Informationssystem basierend auf der Hardware-Adresse des Mobilgeräts. Das Verfahren umfasst ferner Herstellen der Kommunikationsverbindung mit dem Mobilgerät basierend auf der Kopplung.

Ausführungsbeispiele schaffen ferner ein Verfahren für einen Server in einem Netzwerk, zum Bereitstellen von Information über eine Hardware-Adresse eines Mobilgeräts für ein Fahrzeug. Das Verfahren umfasst Erhalten der Information über die Hardware-Adresse des Mobilgeräts von dem Mobilgerät oder von einem weiteren Fahrzeug. Das Verfahren umfasst ferner Speichern der Information über die Hardware-Adresse. Das Verfahren umfasst ferner Bereitstellen der Information über die Hardware-Adresse des Mobilgeräts für das Fahrzeug.

Ausführungsbeispiele schaffen ferner ein Verfahren für ein Mobilgerät, zum Bereitstellen von Information über eine Hardware-Adresse des Mobilgeräts für ein Informationssystem eines Fahrzeugs über einen Server in einem Netzwerk. Das Verfahren umfasst Bestimmen der Information über die Hardware-Adresse basierend auf der Hardware-Adresse des Mobilgeräts. Das Verfahren umfasst ferner Bereitstellen der Information über die Hardware-Adresse für den Server.

Ausführungsbeispiele schaffen ferner ein Programm mit einem Programmcode zum Durchführen zumindest eines der Verfahren wenn der Programmcode auf einem Computer, einem Prozessor, einem Kontrollmodul oder einer programmierbaren Hardwarekomponente ausgeführt wird.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
- Fig. 1: illustriert ein Blockdiagramm eines Ausführungsbeispiels einer Vorrichtung für ein Informationssystem eines Fahrzeugs, zum Herstellen einer Kommunikationsverbindung mit einem Mobilgerät;
- Fig. 1a: illustriert ein Blockdiagramm eines Ausführungsbeispiels einer Vorrichtung für ein Informationssystem eines Fahrzeugs, zum Herstellen einer Kommunikationsverbindung mit einem Mobilgerät, welches ferner einen Server zeigt;
- Fig. 2a: illustriert ein konventionelles System zum Übertragen von Einstellungen von WLAN-Zugangspunkte;
- Fig. 2b: illustriert ein konventionelles System zum Übertragen von Bluetooth-Verbindungen;
- Fig. 2c: illustriert ein beispielhaftes Ausführungsbeispiel zum Übertragen von Information über Hardware-Adressen zwischen Fahrzeugen;
- Fig. 2d: illustriert ein beispielhaftes Ausführungsbeispiel zum Übertragen von Information über eine Hardware-Adresse eines Mobilgeräts zu einem Informationssystem eines Fahrzeugs.
- Fig. 3: illustriert ein Blockdiagramm eines Ausführungsbeispiels einer Vorrichtung für einen Server in einem Netzwerk, zum Bereitstellen von Information über eine Hardware-Adresse eines Mobilgeräts für ein Fahrzeug;
- Fig. 4: illustriert ein Blockdiagramm eines Ausführungsbeispiels einer Vorrichtung für ein Mobilgerät, zum Bereitstellen von Information über eine Hardware-Adresse des Mobilgeräts für ein Informationssystem eines Fahrzeugs über einen Server in einem Netzwerk;
- Fig. 5: illustriert ein Flussdiagramm eines Ausführungsbeispiels eines Verfahrens für ein Informationssystem eines Fahrzeugs, zum Herstellen einer Kommunikationsverbindung mit einem Mobilgerät;
- Fig. 6: illustriert ein Flussdiagramm eines Ausführungsbeispiels eines Verfahrens für einen Server in einem Netzwerk, zum Bereitstellen von Information über eine Hardware-Adresse eines Mobilgeräts für ein Fahrzeug; und
- Fig. 7: illustriert ein Flussdiagramm eines Ausführungsbeispiels eines Verfahrens für ein Mobilgerät, zum Bereitstellen von Information über eine Hardware-Adresse des Mobilgeräts für ein Informationssystem eines Fahrzeugs über einen Server in einem Netzwerk.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer", "eine", "eines " und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

Für viele Infotainment-Funktionen ist ein Pairing zwischen einem Telefon und dem Fahrzeug bzw. dessen Infotainmentsystem (System für Information und Unterhaltung) über Technologien wie Bluetooth notwendig, z.B. Nutzung der Freisprechanlage, Wiedergabe von Audiodateien vom Telefon über die Fahrzeuglautsprecher, und Herstellen der Internetverbindung für das Auto über das Telefon. Die Durchführung des Pairings kann Bedienschritte an beiden Verbindungspartnern erfordern. Diese Bedienabläufe können komplex sein und eine Nutzung einiger Funktionen des Fahrzeugs erschweren.

Wechselt zudem der Nutzer das Fahrzeug (z.B. Neuwagenkauf, neuer Geschäftswagen, Carsharing (Kurzzeitmiete), Mietwagen) so kann der Nutzer dasselbe Telefon erneut mit dem anderen Fahrzeug verbinden um es darin zu nutzen. Das ist aufwändig, insbesondere bei Nutzungsmustern von Fahrzeugen wie bei Carsharing, weil hierbei vom selben Kunden ständig andere Fahrzeuge genutzt werden.

In einigen Ausführungsbeispielen können, ähnlich wie bei Smartphones (programmierbaren Mobiltelefonen) und Tablets (Mobilrechnern mit berührungsempfindlicher Bedienoberfläche), auch bei Fahrzeugen die Einstellungen eines Benutzers über das Internet zwischen von ihm verwendeten Fahrzeugen synchronisiert werden. Dabei kann ermöglicht werden, diese Einstellungen von außerhalb des Fahrzeugs einzusehen oder gar zu verändern, z.B. über eine App auf einem Smartphone oder Tablet.

Die dafür genutzte Infrastruktur kann in Ausführungsbeispielen genutzt werden, um das Pairing weiter zu vereinfachen und um ein einmal eingerichtetes Pairing zwischen einem mobilen Gerät und einem Fahrzeug anschließend in andere Fahrzeuge desselben Benutzers mitzunehmen, so dass kein erneutes Einrichten des Pairing dort notwendig ist.

Konventionelle Systeme können, um einen Bluetooth-Pairing Prozess zu vereinfachen, eine Reihe von Vereinfachungen nutzen (z.B. initiieren der Kopplung über NFC Tags, das SSP Protokoll etc.). Bei WLAN-Verbindungen können ebenfalls Zugangsdaten über mehrere Geräte synchronisiert werden. Obwohl durch diese Lösungen in der Vergangenheit die Anzahl der Bedienschritte für den Nutzer zum Einrichten des Pairings reduziert wird (z.B. keine Eingabe einer auf dem anderen Gerät angezeigten PIN mehr notwendig), sind dennoch weiterhin Bedienhandlungen an beiden Verbindungspartner notwendig. So muss mindestens an einem Gerät die Suche nach Verbindungspartnern gestartet werden und an dem anderen die Sichtbarkeit für eine solche Suche aktiviert werden, die heute aus Sicherheitsgründen häufig deaktiviert ist. Beide Geräte müssen zu dem Zeitpunkt zudem aktiv sein und in Reichweite zueinander befinden.

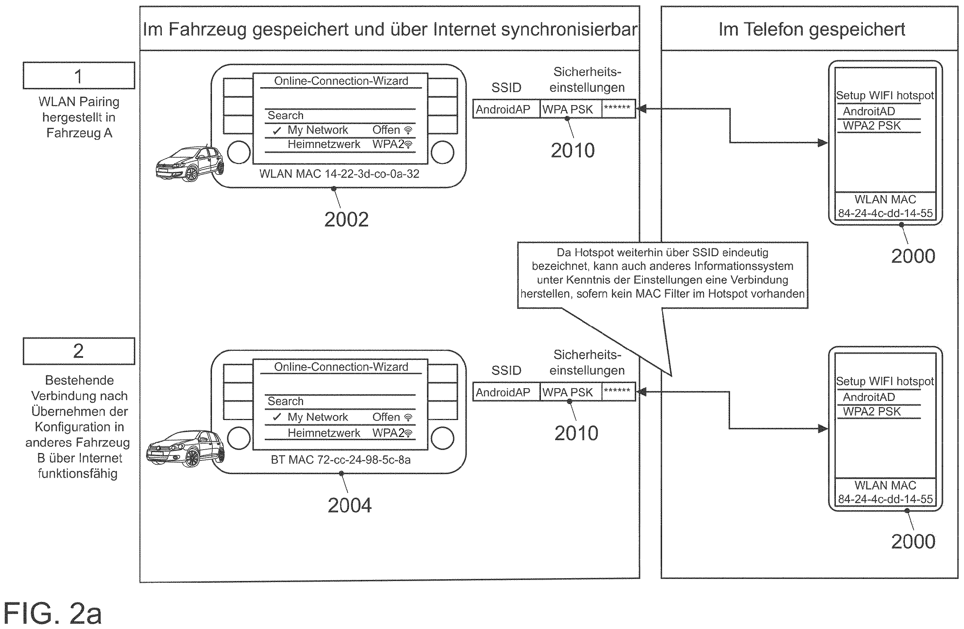

Fig. 2a zeigt beispielhaft die Schritte, die in konventionellen Systemen genutzt werden können, um WLAN-Zugangsdaten, beispielsweise für einen mobilen Zugangspunkt (auch engl. Hotspot) eines Smartphones, über mehrere Geräte so synchronisieren. Ein Smartphone 2000 kann beispielsweise einen mobilen Hotspot bereitstellen, die Einstellungen dazu sind im Telefon gespeichert. Diese Einstellungen 2010 (beispielsweise Zugangsdaten) können in einem Informationssystem 2002 eines ersten Fahrzeugs eingegeben werden und in ein Informationssystem 2004 eines zweiten Fahrzeugs etwa über das Internet synchronisiert werden. Da ein Hotspot über die SSID eindeutig bezeichnet ist, kann auch ein anderes Informationssystem eines weiteren Fahrzeugs unter Kenntnis der Einstellungen 2010 eine Verbindung ist, sofern kein Medienzugangskontroll-Adressen-Filter des Hotspots (auch engl. Medium Access Control, MAC, Adressen-Filter) dies verhindert.

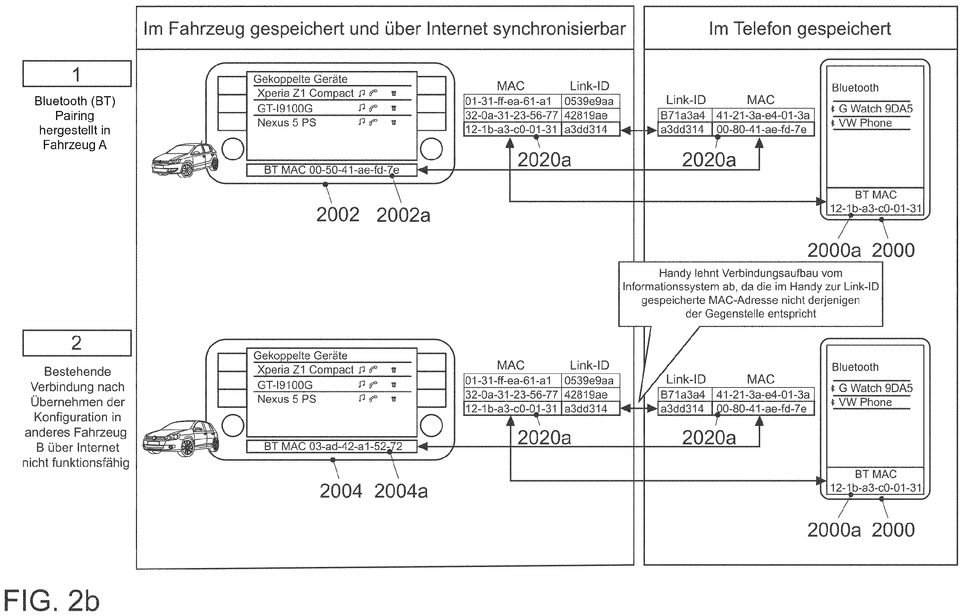

Der für WLAN Verbindung bekannte Weg der Übertragung der Verbindungseinstellungen auf ein anderes Gerät desselben Benutzers kann nicht auf Bluetooth Verbindungen übertragen werden. Fig. 2b zeigt ein Beispiel. Problematisch hierbei ist, dass bei Bluetooth beide Verbindungspartner, etwa ein Informationssystem 2002 eines ersten Fahrzeugs und ein Smartphone 2000, neben dem im Rahmen des Pairings vereinbarten Schlüssel (hier Link ID genannt) aus Sicherheitsgründen auch die MAC Adresse 2002a; 2002a; 2004a der Gegenstelle speichern 2020a, 2020b, 2020c. Wird nun dieses Paar aus MAC-Adresse und Link ID von einem Gerät A (Informationssystem 2002 des ersten Fahrzeugs) auf ein anderes Gerät B (Informationssystem 2002 eines zweiten Fahrzeugs) übertragen, so wird die Gegenstelle 2000 eine Kommunikation mit dem Gerät B 2004 ablehnen, da die in der Gegenstelle hinterlegte 2020b MAC Adresse 2002a für die Verbindung weiterhin diejenige des Geräts A 2002 ist, und nicht die MAC Adresse 2004a des Geräts B 2004.

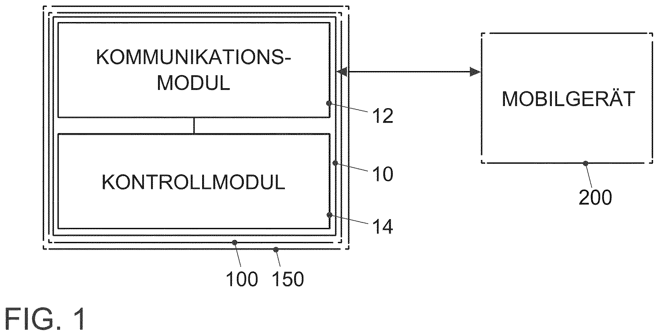

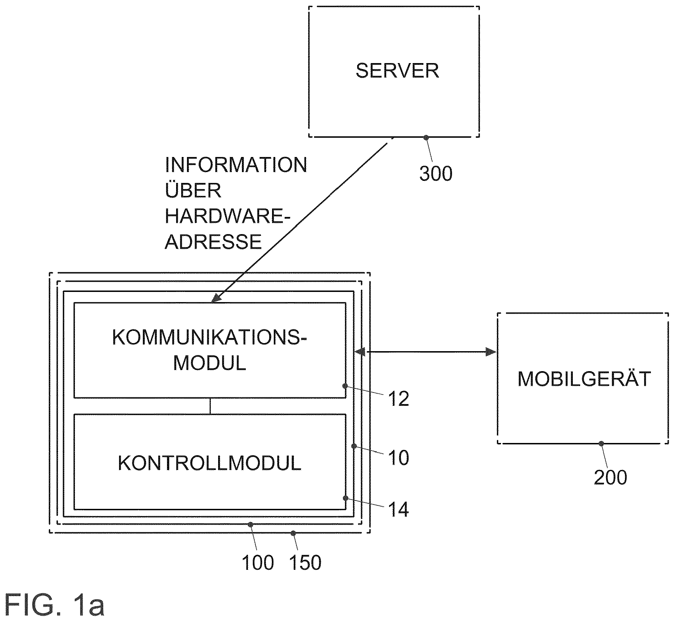

Ausführungsbeispiele können eine Übertragung von Benutzereinstellungen zwischen Fahrzeugen über Benutzerkonten im Internet nutzen, um darüber auch Daten zu Bluetooth-Pairings zu übertragen. Eine bestimmte Behandlung dieser Daten im empfangenen Gerät, etwa einem Kontrollmodul 14 aus Fig. 1, ermöglicht es, dass zu Geräten automatisch Pairings aufgebaut werden, die zuvor vom Benutzer mit anderen Fahrzeugen verwendet wurden. Dabei kann in manchen Ausführungsbeispielen keine oder reduzierte Nutzerinteraktion an der Gegenstelle notwendig sein, beispielsweise kann nur der Verbindungsaufbau einmalig bestätigt werden, es könnten in Ausführungsbeispielen keine Bedienhandlungen auf Fahrzeugseite vorzunehmen sein. Der Kopplungsprozess wird dadurch vereinfacht und der Kunde kann zudem ein einmal eingerichtetes Pairing in weitere Fahrzeuge übertragen.

Ausführungsbeispiele können es weiterhin ermöglichen, über eine App auf dem zu koppelnden Gerät das Pairing dieses Gerät mit den vom Nutzer verwendeten Fahrzeugen zu steuern, ohne dass das Gerät sich zu diesem Zeitpunkt in der Nähe eines Fahrzeugs befinden muss. So kann das Gerät für ein Pairing in zukünftigen Fahrzeugen vorgemerkt werden oder beispielsweise ein bestehendes Pairing gelöst werden.

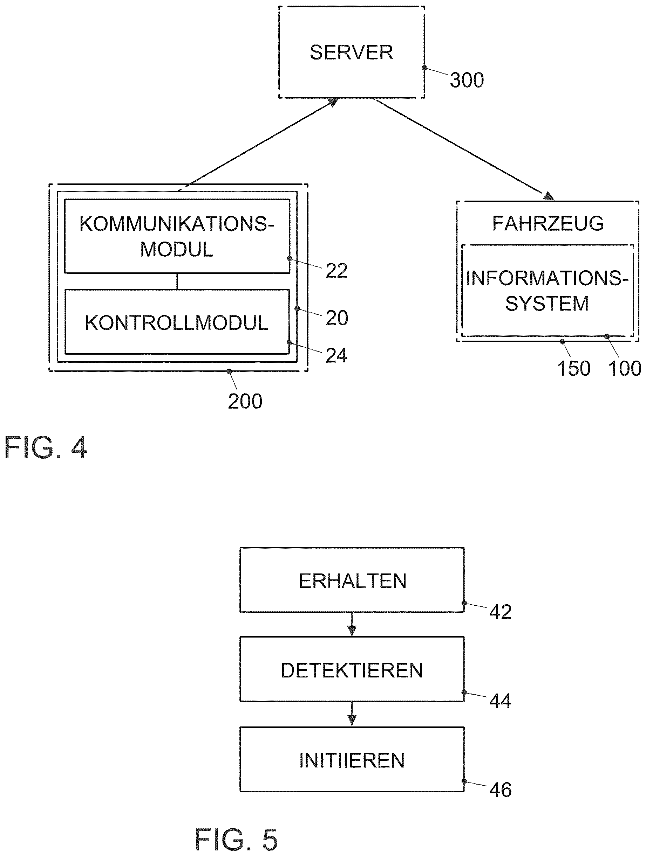

Fig. 1 zeigt eine Vorrichtung 10 für ein Informationssystem 100 eines Fahrzeugs 150, zum Herstellen einer Kommunikationsverbindung mit einem Mobilgerät 200. Die Vorrichtung 10 umfasst ein Kommunikationsmodul 12 und ein Kontrollmodul 14. Das Kommunikationsmodul 12, und ein Kommunikationsmodul 22 aus Fig. 5, kann beispielsweise ein Bluetooth-Kommunikationsmodul oder einem WLAN-Kommunikationsmodul umfassen oder diesem entsprechen.

Das Kontrollmodul 14 ist ausgebildet zum Steuern des Kommunikationsmoduls 12. Das Kommunikationsmodul ist ferner ausgebildet zum Erhalten von Information über eine Hardware-Adresse des Mobilgeräts 200. Die Hardware-Adresse kann beispielsweise einer WLAN MAC-Adresse, einer Bluetooth-MAC-Adresse, oder einer Hardware-Adresse eines weiteren Nahfunk-Sende-Moduls entsprechen.

Das Kontrollmodul 14 ist ferner ausgebildet zum Detektieren der Hardware-Adresse des Mobilgeräts 200 über das Kommunikationsmodul 12 basierend auf der Information über die Hardware-Adresse. Das Kontrollmodul 14 kann beispielsweise ausgebildet sein, einen von dem Kommunikationsmodul 12 genutzten Frequenzbereich zu überwachen, um eine Präsenz von Geräten, die in diesem Frequenzbereich kommunizieren, zu erfassen. Das Kontrollmodul 14 kann zum Detektieren beispielsweise ausgebildet sein, Geräteverfügbarkeits-Pakete zu empfangen (auch engl. Advertisement Packets), etwa während eines Durchlaufs über mehrere Frequenzbereiche oder Kanäle.

In manchen Ausführungsbeispielen kann das Kontrollmodul 14 ausgebildet sein, um Information über ein oder mehrere Hardware-Adressen zu erhalten, wobei die Hardware-Adresse des Mobilgeräts 200 in der Information über die ein oder mehreren Hardware-Adressen umfasst ist. Das Kontrollmodul 14 kann ausgebildet sein, um die Hardware-Adresse des Mobilgeräts 200 basierend auf der Information über die ein oder mehreren Hardware-Adressen zu detektieren. In einer beispielhaften Implementierung kann das Kontrollmodul 14 ausgebildet sein, eine Liste, eine Tabelle oder eine Datenstruktur, die die ein oder mehreren Hardware-Adressen umfasst, zu erhalten und das Detektieren basierend auf den ein oder mehreren Hardware-Adressen durchzuführen.

Das Kontrollmodul 14 ist ferner ausgebildet zum Initiieren einer Kopplung des Mobilgeräts 200 mit dem Informationssystem 100 basierend auf der Hardware-Adresse des Mobilgeräts 200. Das Kontrollmodul 14 kann beispielsweise ausgebildet sein, die Kopplung automatisch oder ohne Benutzerbestätigung basierend auf der Hardware-Adresse des Mobilgeräts 200 zu initiieren. In manchen Ausführungsbeispielen kann das Kommunikationsmodul 12 ausgebildet sein, um über ein Kommunikationsprotokoll mit dem Mobilgerät 200 zu kommunizieren. Das Kontrollmodul 14 kann ausgebildet sein, um die Kopplung zu initiieren, falls das Kommunikationsmodul 12 nicht mit einem weiteren Mobilgerät über das Kommunikationsprotokoll eine Kommunikationsverbindung hergestellt hat. Das Kontrollmodul 14 kann beispielsweise ausgebildet sein, um die Kopplung basierend auf einer Benutzeraktion zu initiieren, beispielsweise einer Schaltfläche zum Koppeln von nicht-gekoppelten aber durch die Information über die Hardware-Adresse oder die Information über die ein oder mehreren Hardware-Adressen bekannten Mobilgeräten. Beispielsweise könnte das Informationssystem eine Schaltfläche, etwa einen Knopf oder eine Schaltfläche auf einem berührungsempfindlichen Bildschirm bereitstellen, um ein Koppeln von Geräten zu initiieren, beispielsweise ohne das Mobilgerät 200 aus einer Darstellung auszuwählen.

Die Kopplung (auch engl. Pairing) mit dem Mobilgerät kann beispielsweise einen Austausch von Hardware-Adressen und/oder einen Austausch von Schlüsseln oder Teilschlüsseln umfassen. Das Kontrollmodul 14 kann beispielsweise ausgebildet sein, für das Mobilgerät 200 Informationen über die Kopplung zu speichern, beispielsweise Identifikationsinformation der Kopplung, beispielsweise eine Link-ID (Verbindungs-Identifikation), eine Hardware-Adresse der Gegenstelle (des Mobilgeräts 200), und/oder Schlüsselinformation. Die Schlüsselinformation kann beispielsweise auf einem Schlüsseltauschverfahren basieren und einem zusammengefügtem Schlüssel entsprechen. Die Kopplung kann in manchen Ausführungsbeispielen die Voraussetzung für ein Herstellen einer Kommunikationsverbindung sein. Besteht die Kopplung, so kann das Kontrollmodul 14 ausgebildet sein, die Kommunikationsverbindung bei Detektieren des Mobilgeräts 200 aufzubauen.

In einigen Ausführungsbeispielen kann das Kontrollmodul 14 beispielsweise ausgebildet sein, um basierend auf der Information über die Hardwareadresse zu bestimmen, ob das Informationssystem 100 mit dem Mobilgerät 200 gekoppelt ist. Das Kontrollmodul 14 kann ausgebildet sein, um die Kopplung basierend darauf zu initiieren, ob das Informationssystem 100 mit dem Mobilgerät 200 gekoppelt ist.

In zumindest einigen Ausführungsbeispielen kann das Koppeln einen Schlüsselaustausch und/oder einen Austausch von Hardware-Adressen umfassen.

Das Kontrollmodul 14 ist ferner ausgebildet zum Herstellen der Kommunikationsverbindung mit dem Mobilgerät 200 basierend auf der Kopplung. Das Kontrollmodul 14 kann beispielsweise ausgebildet sein, Nachrichten zum Verbindungsaufbau, beispielsweise Page-Nachrichten (von engl. für ausrufen) bereitzustellen und mit dem Mobilgerät 200 den Verbindungsaufbau auszuhandeln.

In zumindest einigen Ausführungsbeispielen kann das Kommunikationsmodul 12 zumindest zwei Sende-Empfangsmodule umfassen. Das Erhalten der Information über die Hardware-Adresse und die Kommunikationsverbindung mit dem Mobilgerät 200 können auf unterschiedlichen Sende-Empfangsmodulen der zumindest zwei Sende-Empfangsmodule basieren. Beispielsweise kann das Kontrollmodul 14 ausgebildet sein, die Information über die Hardware-Adresse über ein Sende-Empfangsmodul für ein zelluläres Mobilfunksystem und/oder ein WLAN-Sende-Empfangsmodul zu erhalten und die Kommunikationsverbindung über ein Bluetooth-Sende-Empfangsmodul herzustellen.

In zumindest einigen Ausführungsbeispielen kann das Kommunikationsmodul 12 ausgebildet sein, um in einem Netzwerk zu kommunizieren. Das Kontrollmodul 14 kann ausgebildet sein, um die Information über die Hardware-Adresse von einem Server 300 im Netzwerk zu erhalten, wie in Fig. 1a illustriert. Fig.1a erweitert Fig. 1 um den Server 300. Das Netzwerk kann beispielsweise dem Internet oder einem Netzwerk eines Fahrzeugherstellers entsprechen, beispielsweise über eine Mobilfunkverbindung oder über ein Funknetzwerk einer Serviceeinrichtung des Fahrzeugherstellers. Der Server 300 kann stellvertretend einem Einzelserver, einer Gruppe von Servern, einem Rechenzentrum, einer virtuellen Serverinstanz, einer Gruppe von virtuellen Serverinstanzen oder einem Backend-System eines Geräte- oder Fahrzeugherstellers entsprechen.

Das Kontrollmodul 14 kann beispielsweise ausgebildet sein, um die Information über die Hardware-Adresse von einem weiteren Fahrzeug über den Server 300 zu erhalten. Das Kontrollmodul 14 kann beispielsweise ausgebildet sein, um Information über ein oder mehrere Hardware-Adressen von mit dem Informationssystem 100 gekoppelten Mobilgeräten zu bestimmen und dem Server 300 bereitzustellen. Diese können von dem Server 300 anderen Fahrzeugen des Nutzers bereitgestellt werden.

Alternativ oder zusätzlich kann das Kontrollmodul 14 ausgebildet sein, um die Information über die Hardware-Adresse von dem Mobilgerät 200 über den Server 300 zu erhalten.

Das Kontrollmodul 14 ist mit dem Kommunikationsmodul gekoppelt. In Ausführungsbeispielen kann das Kontrollmodul 14, ein Kontrollmodul 24 von Fig. 5 und/oder ein Kontrollmodul 34 von Fig. 4 einem beliebigen Controller oder Prozessor oder einer programmierbaren Hardwarekomponente entsprechen. Beispielsweise kann das Kontrollmodul 14; 24; 34 auch als Software realisiert sein, die für eine entsprechende Hardwarekomponente programmiert ist. Insofern kann das Kontrollmodul 14; 24; 34 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Kontrollmoduls 14; 24; 34 denkbar.

In zumindest einigen Ausführungsbeispielen kann das Kommunikationsmodul 12, und ein Kommunikationsmodul 22 aus Fig.5, ausgebildet sein, über ein Mobilfunksystem zu kommunizieren, beispielsweise über ein zelluläres Mobilfunksystem, beispielsweise basierend auf einem der Mobilfunksysteme, die von entsprechenden Standardisierungsgremien, wie z.B. der 3rd Generation Partnership Project (3GPP)-Gruppe, standardisiert werden. Beispielsweise umfassen diese das Global System for Mobile Communications (GSM), Enhanced Data Rates for GSM Evolution (EDGE), GSM EDGE Radio Access Network (GERAN), das Universal Terrestrial Radio Access Network (UTRAN) oder das Evolved UTRAN (E-UTRAN), wie z. B. das Universal Mobile Telecommunication System (UMTS), Long Term Evolution (LTE) oder LTE-Advanced (LTE-A), oder auch Mobilfunksysteme anderer Standards, wie z. B. das Worldwide Interoperability for Microwave Access (WIMAX), IEEE802.16 oder Wireless Local Area Network (WLAN), IEEE802.11, sowie generell ein System, das auf einem Zeitbereichsvielfachzugriffsverfahren (Time Division Multiple Access (TDMA)), Frequenzbereichsvielfachzugriffsverfahren (Frequency Division Multiple Access (FDMA)), Kodebereichsvielfachzugriffsverfahren (Code Division Multiple Access (CDMA)), orthogonalen Frequenzbereichsvielfachzugriffsverfahren (Orthogonal Frequency Division Multiple Access (OFDMA)) oder einer anderen Technologie bzw. Vielfachzugriffverfahren basiert. Die Kommunikationsverbindung kann beispielsweise einer Bluetooth, einer WLAN, oder einer weiteren Funk-Datenverbindung entsprechen.

Das Informationssystem 100 kann beispielsweise einem Bord-Informationssystem des Fahrzeugs 150 entsprechen (auch engl. On-Board Unit, OBU), oder einem Infotainment-System des Fahrzeugs 150, beispielsweise einem eingebetteten Computer, der Funktionen zur Steuerung von Fahrzeugfunktionen und/oder von Fahrzeugunterhaltungssystem bereitstellt. Das Mobilgerät 200 kann beispielsweise einem Mobiltelefon, einem programmierbaren Mobiltelefon, einem Smartphone, einem Tablet-Computer oder einem mobilen Internet-Zugangspunkt (auch engl. Hotspot) entsprechen. In zumindest manchen Ausführungsbeispielen kann das Fahrzeug 150 beispielsweise einem Landfahrzeug, einem Wasserfahrzeug, einem Luftfahrzeug, einem Schienenfahrzeug, einem Straßenfahrzeug, einem Auto, einem Geländefahrzeug, einem Kraftfahrzeug, oder einem Lastkraftfahrzeug entsprechen.

Das Kommunikationsmodul 12 ist mit dem Kontrollmodul 14 gekoppelt. Ausführungsbeispiele schaffen ferner das Informationssystem 100 umfassend die Vorrichtung 10, und/oder das Fahrzeug 150 umfassend das Informationssystem 100 und die Vorrichtung 10.

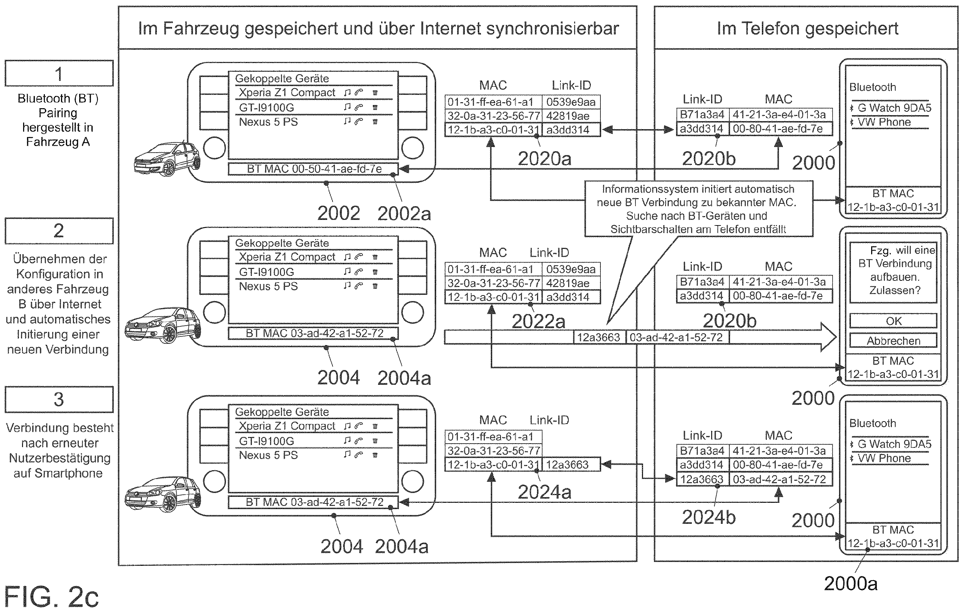

Fig. 2c illustriert ein beispielhaftes Ausführungsbeispiel, in dem die Information über die Hardware-Adresse oder die Information über die ein oder mehreren Hardware-Adressen 2022a basierend auf einer Liste von gekoppelten Geräten 2020a von einem Informationssystem 2002 eines Fahrzeugs mit einer Hardware-Adresse 2002a zu einem Informationssystem 2004 eines weiteren Fahrzeugs mit einer Hardware-Adresse 2004a übertragen wird. Die Liste von gekoppelten Geräten 2020a umfasst die Hardware-Adressen und Link-IDs der gekoppelten Geräte, u.a. die Hardware-Adresse 2000a des Mobilgeräts 2000. In Ausführungsbeispiele können die Informationssysteme 2004; 2004a die Vorrichtung 10 umfassen und dem Informationssystem 100 entsprechen. Das Mobilgerät 2000 kann dem Mobilgerät 200 entsprechen.

In zumindest manchen Ausführungsbeispielen ist das Kontrollmodul 14 ausgebildet, die Information über die Hardware-Adresse über einen geeigneten Mechanismus (z.B. über ein Benutzerkonto des Fahrzeugnutzers auf dem Server 300) zu erhalten. In zumindest einigen Ausführungsbeispielen kann die Information über die Hardware-Adresse nicht die Paare aus Link-ID und Hardware-Adressen 2020a umfassen, sondern nur deren Hardware -Adressen 2022a. Außerdem könnten das Kontrollmodul 14 ausgebildet sein, für die Hardware-Adresse(n) Meta-Information zu erhalten, die beispielsweise einen Zeitpunkt der letzten Verwendung oder eine Häufigkeit der Verwendung umfassen kann.

In zumindest einigen Ausführungsbeispielen kann das Kontrollmodul 14 ausgebildet sein, die Information über die Hardware-Adresse oder die Information über die ein oder mehreren Hardware-Adressen mit einer in diesem Fahrzeug bereits bekannten Mehrzahl an Bluetooth Geräten, zu denen dort ebenfalls Hardware-Adressen und/oder Meta-Information und ggf. auch bereits Link IDs vorliegen können, zusammenzuführen. Das Kontrollmodul 14 kann ausgebildet sein, Meta-Information über die ein oder mehreren Hardware-Adressen von dem Server 300 zu erhalten. Das Kontrollmodul 14 kann ausgebildet sein, Einträge für bereits vorhandene Hardware-Adressen zusammenzuführen, d.h. es kann beispielsweise nur ein Eintrag behalten werden mitsamt der zugehörigen Link ID (sofern sie vorliegt). Meta-Information kann ebenfalls geeignet zusammengeführt werden.

Ist das Fahrzeug aktuell mit einem Gerät über Bluetooth gekoppelt, so kann in manchen Ausführungsbeispielen keine weitere Aktion erfolgen. Ist dies nicht der Fall, so kann das Kontrollmodul 14 ausgebildet sein, um für die zusammengeführte Mehrzahl an Bluetooth Geräten in einer vordefinierten oder zufälligen Reihenfolge eine Kopplung oder ein Herstellen einer Verbindung zu initiieren. Das Kontrollmodul 14 kann ausgebildet sein, um die Reihenfolge basierend auf der Meta-Information zu bestimmen, z.B. nach Zeitpunkt der letzten Verwendung des Pairing.

Liegt bereits eine Link-ID vor, kann das Kontrollmodul 14 ausgebildet sein, die Kommunikationsverbindung wiederherzustellen. Liegt keine Link-ID vor, so kann das Kontrollmodul 14 ausgebildet sein, das Koppeln zu initiieren. Dies kann dazu führen, dass der Benutzer dies an der Gegenstelle ggf. quittieren kann. Das Kontrollmodul 14 kann ausgebildet sein, dabei eine neue Link ID zu vereinbaren werden und zu dieser Hardware-Adresse lokal abzuspeichern 2024a. Die Pairing-Liste 2020b des Mobilgeräts 2000 kann entsprechend angepasst werden 2024b und die Hardware-Adresse des Informationssystems 2004 kann mit Link-ID aufgenommen werden.

Schlägt die Aktion für den Eintrag fehl, so kann das Kontrollmodul 14 ausgebildet sein, um mit dem nächsten Eintrag fortgefahren. Ist die Aktion erfolgreich, so kann das Verfahren beendet sein. In beiden Fällen kann das Kontrollmodul 14 ausgebildet sein, anschließend die Metainformationen zum Eintrag zu aktualisieren.

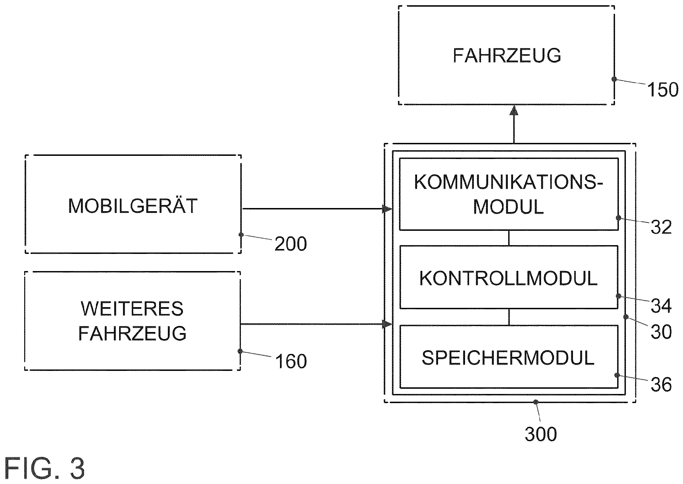

Fig. 3 illustriert ein Blockdiagramm eines Ausführungsbeispiels einer Vorrichtung 30 für einen Server 300 in einem Netzwerk, zum Bereitstellen von Information über eine Hardware-Adresse eines Mobilgeräts 200 für ein Fahrzeug 150. Die Vorrichtung 30 umfasst ein Kommunikationsmodul 32 und das Kontrollmodul 34. Das Kommunikationsmodul 32 kann beispielsweise ausgebildet sein, um über das Internet oder über ein Fahrzeugspezifisches Netzwerk mit dem Fahrzeug 150, dem Mobilgerät 150 und/oder einem weiteren Fahrzeug 160 zu kommunizieren. Das Kommunikationsmodul 32 kann beispielsweise ausgebildet sein, um eine Mehrzahl von Transportmedien zu nutzen, beispielsweise basierend auf kabellosen und kabelgebundenen Teilstrecken. Das Kommunikationsmodul 32 kann beispielsweise ein Ethernet und/oder ein optisches Sende-Empfangsmodul umfassen.

Das Kontrollmodul 34 ist ausgebildet zum Erhalten der Information über die Hardware-Adresse des Mobilgeräts 200 von dem Mobilgerät 200 oder von dem weiteren Fahrzeug 160 über das Kommunikationsmodul 32. Das Kontrollmodul 34 ist ausgebildet zum Speichern der Information über die Hardware-Adresse in einem Speichermodul 36. Das Speichermodul kann beispielsweise zumindest ein Element der Gruppe von computerlesbares Speichermedium, magnetisches Speichermedium, optisches Speichermedium, Festplatte, Flash-Speicher, Diskette, Zufallszugriffsspeicher (auch engl. Random Access Memory), Programmable Read Only Memory (PROM), Erasable Programmable Read Only Memory (EPROM), Electronically Erasable Programmable Read Only Memory (EEPROM), und Netzwerkspeicher umfassen.

Das Kontrollmodul 34 ist ferner ausgebildet zum Bereitstellen der Information über die Hardware-Adresse des Mobilgeräts 200 für das Fahrzeug 150 über das Kommunikationsmodul 32. Das Kontrollmodul 34 kann beispielsweise ausgebildet sein, um die Information über die Hardware-Adresse als Datennachricht bereitzustellen, etwa basierend auf einem Abruf des Fahrzeugs 150 oder basierend auf einem Verteilen (auch engl. Broadcast).

In manchen Ausführungsbeispielen ist das Kontrollmodul 34 ausgebildet, um Information über ein oder mehrere Hardware-Adressen von ein oder mehreren Mobilgeräten von den ein oder mehreren Mobilgeräten und/oder dem weiteren Fahrzeug 160 zu erhalten. Die Information über die ein oder mehreren Hardware-Adressen kann die Hardware-Adresse des Mobilgeräts 200 umfassen. Das Kontrollmodul 34 kann ausgebildet sein, um die Information über die ein oder mehreren Hardware-Adressen in dem Speichermodul 36 zu speichern. Das Kontrollmodul 34 kann ausgebildet sein, die Information über die ein oder mehreren Hardware-Adressen dem Fahrzeug 150 bereitzustellen. Beispielsweise kann das Kontrollmodul 34 ausgebildet sein, um Information über eine Nutzung der ein oder mehreren Hardware-Adressen zu erhalten. Das Kontrollmodul 34 kann beispielsweise ausgebildet sein, um die Information über die ein oder mehreren Hardware-Adresse basierend auf der Information über die Nutzung der ein oder mehreren Hardware-Adressen bereitzustellen, beispielsweise basierend auf einer letztmaligen Nutzung oder einer Frequenz der Nutzung der ein oder mehreren Hardware-Adressen.

Das Kontrollmodul 34 kann beispielsweise ausgebildet sein, Meta-Information über die ein oder mehreren Hardware-Adressen dem Fahrzeug 150 bereitzustellen. Die Meta-Information kann beispielsweise die Information über die Nutzung umfassen.

Das Kontrollmodul ist mit dem Kommunikationsmodul 32 und mit dem Speichermodul 36 gekoppelt. Die Vorrichtung 30 kann das Speichermodul 36 umfassen. Ausführungsbeispiele schaffen ferner den Server 300 umfassend die Vorrichtung 30.

Mehr Details und Aspekte der Vorrichtung 30 (z.B. Informationssystem 100, Fahrzeug 150, Mobilgerät 200, Server 300, Hardware-Adresse) werden in Verbindung mit dem Konzept oder Beispielen genannt, die vorher (z.B. Fig. 1 bis 2) beschrieben wurden. Die Vorrichtung 30 kann ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

Fig. 4 illustriert ein Blockdiagramm eines Ausführungsbeispiels einer Vorrichtung 20 für ein Mobilgerät 200, zum Bereitstellen von Information über eine Hardware-Adresse des Mobilgeräts 200 für ein Informationssystem 100 eines Fahrzeugs 150 über einen Server 300 in einem Netzwerk. Die Vorrichtung umfasst ein Kommunikationsmodul 22 und ein Kontrollmodul 24. Das Kontrollmodul 24 ist mit dem Kommunikationsmodul 22 gekoppelt. Ausführungsbeispiele schaffen ferner das Mobilgerät 200 umfassend die Vorrichtung 20.

Das Kommunikationsmodul 22 kann beispielsweise zwei oder mehrere Sende-Empfangsmodule umfassen. Ein Sende-Empfangsmodul kann beispielsweise zur Kommunikation über ein zelluläres Mobilfunknetz ausgebildet sein, zur Kommunikation mit dem Server 300. Ein weiteres Sende-Empfangsmodul kann zur Kommunikation mit dem Informationssystem 100 ausgebildet sein, beispielsweise über ein Nahfunksystem, beispielsweise Bluetooth.

Das Kontrollmodul 24 ist ausgebildet zum Bestimmen der Information über die Hardware-Adresse basierend auf der Hardware-Adresse des Mobilgeräts 200. Das Kontrollmodul 24 kann beispielsweise ausgebildet sein, die Information über die Hardware-Adresse basierend auf einer Programmschnittstelle oder basierend auf einer Informationsressource eines Betriebssystems des Mobilgeräts zu bestimmen. In manchen Ausführungsbeispielen kann das Kontrollmodul 24 ausgebildet sein, ein oder mehrere Hardware-Adressen von Geräten, die mit dem Mobilgerät 200 gekoppelt sind und diesem bekannt sind, und/oder von Hardware-Adressen von Sende-Empfangsmodulen des Mobilgeräts 200, als Information über ein oder mehrere Hardware-Adressen bereitzustellen.

Das Kontrollmodul 24 ist ferner ausgebildet zum Bereitstellen der Information über die Hardware-Adresse für den Server über das Kommunikationsmodul 22. Das Kontrollmodul 24 kann beispielsweise ausgebildet sein, um die Information über die Hardware-Adresse dem Informationssystem 100 über den Server 300 bereitzustellen.

In manchen Ausführungsbeispielen 24 ist das Kontrollmodul 24 ferner ausgebildet, um ein Koppeln des Mobilgeräts 200 mit dem Informationssystem 100 zu bestätigen, beispielsweise über eine Nutzerabfrage über eine Benutzeroberfläche oder ohne Nutzerinteraktion.

Mehr Details und Aspekte der Vorrichtung 20 (z.B. Informationssystem 100, Fahrzeug 150, Mobilgerät 200, Server 300, Hardware-Adresse) werden in Verbindung mit dem Konzept oder Beispielen genannt, die vorher (z.B. Fig. 1 bis 3) beschrieben wurden. Die Vorrichtung 20 kann ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

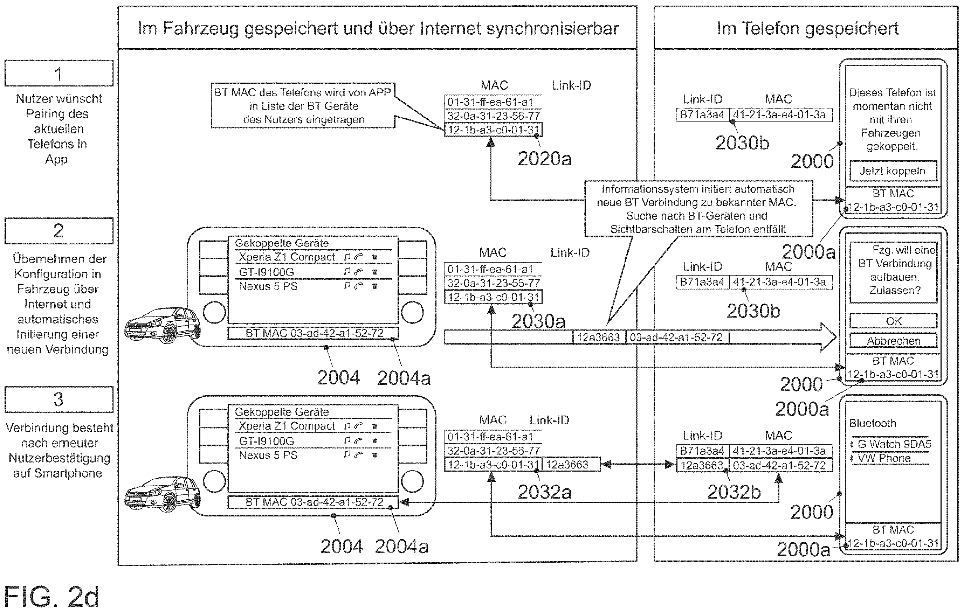

Fig. 2d zeigt ein beispielhaftes Ausführungsbeispiel zum Bereitstellen der Information über die Hardware-Adresse durch ein Mobilgerät 2000, das beispielsweise dem Mobilgerät 200 entsprechen kann. In manchen Ausführungsbeispielen kann die Vorrichtung 20, beispielsweise in Form eines Computerprogramms für ein Mobilgerät, eine Möglichkeit zum vereinfachten Pairing bereitstellen, die in manchen Ausführungsbeispielen von beliebigen Orten genutzt werden kann, etwa entfernt von dem Fahrzeug 2004, das dem Fahrzeug 150 entsprechen kann.

Beispielsweise kann das Kontrollmodul 24 ausgebildet sein, die oder ein oder mehrere Hardware-Adressen 2030a der Pairing Geräte des Nutzers von einem Server, etwa dem Server 300, abzurufen (z.B. indem es über Internet auf die Einstellungen in dessen Benutzerkonto zugreift) und kann ausgebildet sein, darin nach der Hardware-Adresse 2000a, etwa den Bluetooth MAC Adresse des Mobilgeräts 2000 suchen.

Ist sie nicht vorhanden, so kann das Kontrollmodul 24 ausgebildet sein, dem Benutzer anzuzeigen, dass das Gerät in seinen Fahrzeugen nicht verbunden ist. Ihm kann die Möglichkeit geboten werden, zukünftig ein Pairing zu diesem Gerät automatisch herzustellen und dazu die Hardware-Adresse 2000a in eine Liste 2030a der ein oder mehreren Hardware-Adressen einzufügen (ggf. wird eine entsprechende Meta-Information dazu geschrieben, die einen hoch-priorisierten Kopplungsversuch zu diesem Gerät bewirkt). Das Kontrollmodul 24 kann ausgebildet sein, die Information über die Hardware-Adresse und/oder Meta-Information dem Informationssystem 2004 über den Server bereitzustellen. Wird nun die Liste in das Fahrzeug 2004 übertragen, so kann das Fahrzeug versuchen, ein neues Pairing zu dem Gerät herzustellen, etwa durch das Kontrollmodul 14. Das Kontrollmodul 24 kann ausgebildet sein, basierend auf dem Pairing die Hardware-Adresse 2004a in eine Liste 2030b von Pairing-Geräten des Mobilgeräts 2000 zu übernehmen und eine Liste 2032a von Pairing-Geräten des Fahrzeugs 2004, die auf der Information über die ein oder mehreren Hardware-Adressen 2030a basieren kann, um die entsprechende Link-ID zu ergänzen.

Ist die Hardware-Adresse dagegen in den ein oder mehreren Hardware-Adressen bereits vorhanden, so kann dem Benutzer angezeigt werden, dass dieses Gerät in seinen Fahrzeugen verbunden wird. Das Kontrollmodul 24 kann ausgebildet sein, die Hardware-Adresse des Mobilgeräts 2000 basierend auf einer Benutzerinteraktion von der Information über die ein oder mehreren Hardware-Adressen 2030a zu entfernen. Das Kontrollmodul 34 kann ausgebildet sein, das Entfernen der Hardware-Adresse dem Kontrollmodul 14 bereitzustellen, und das Kontrollmodul 14 kann ausgebildet sein, die Hardware-Adresse aus den gespeicherten ein oder mehreren Hardware-Adressen zu entfernen. Das Kontrollmodul 14 kann ausgebildet sein, eine zu diesem Zeitpunkt ggf. bereits bestehende Verbindung zu diesem Gerät basierend auf dem entfernen zu beenden. Alternativ, statt den Eintrag zum Löschen aus der Liste zu entfernen, können auch dessen Metadaten als gelöscht auszeichnet werden.

In manchen Ausführungsbeispielen kann das Kontrollmodul 14 ausgebildet sein, um die Information über die Hardware-Adresse oder die Information über die ein oder mehreren Hardware-Adressen auf einem mobilen Speichermodul zu speichern, beispielsweise auf einem tragbaren Flash-Speicher oder einer Datenkarte. Das Kommunikationsmodul 12 kann beispielsweise ein Modul zum Beschreiben und/oder Lesen von mobilen Speichermodulen umfassen. In einigen Ausführungsbeispielen kann das Kontrollmodul 14 ausgebildet sein, um die Information über die Hardware-Adresse oder die Information über die ein oder mehreren Hardware-Adressen über eine Nahfunkverbindung von dem Mobilgerät 200 zu erhalten, beispielsweise per Nahfeldkommunikation (auch engl. Near Field Communication, NFC) oder über verbindungsloses Bluetooth.

Ausführungsbeispiele schaffen ferner eine Vorrichtung für ein Mobilgerät, zum Herstellen einer Kommunikationsverbindung mit dem Mobilgerät 200, das ähnlich der Vorrichtung 10 implementiert ist. Ausführungsbeispiele schaffen ferner eine Vorrichtung für einen Computer, zum Herstellen einer Kommunikationsverbindung mit dem Mobilgerät 200, das ähnlich der Vorrichtung 10 implementiert ist. In manchen Ausführungsbeispielen kann Vorrichtung 20 analog zum Bereitstellen der Information über die Hardwareadresse des Mobilgeräts für das Informationssystem des Fahrzeugs ausgebildet sein, die Information über die Hardware-Adresse einem weiteren Mobilgerät oder einem Computer bereitzustellen. Analog kann die Vorrichtung 30 ausgebildet sein, die Information über die Hardware-Adresse einem Mobilgerät oder einem Computer bereitzustellen.

Fig. 5 illustriert ein Flussdiagramm eines Ausführungsbeispiels eines Verfahrens für ein Informationssystem 100 eines Fahrzeugs 150, zum Herstellen einer Kommunikationsverbindung mit einem Mobilgerät 200. Das Verfahren umfasst Erhalten 42 von Information über eine Hardware-Adresse des Mobilgeräts 200. Das Verfahren umfasst ferner Detektieren 44 der Hardware-Adresse des Mobilgeräts 200 basierend auf der Information über die Hardware-Adresse. Das Verfahren umfasst ferner Initiieren 46 einer Kopplung des Mobilgeräts 200 mit dem Informationssystem 100 basierend auf der Hardware-Adresse des Mobilgeräts 200. Das Verfahren umfasst ferner Herstellen 48 der Kommunikationsverbindung mit dem Mobilgerät 200 basierend auf der Kopplung.

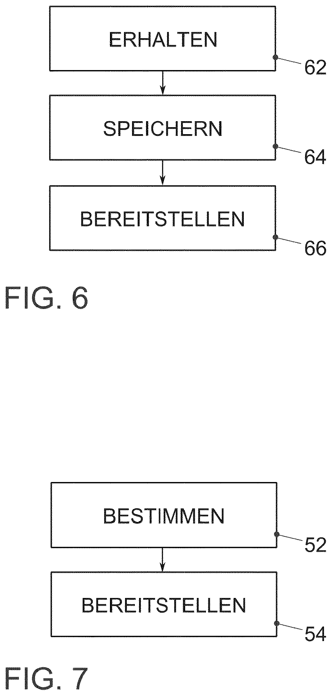

Fig.6 illustriert ein Flussdiagramm eines Ausführungsbeispiels eines Verfahrens für einen Server 300 in einem Netzwerk, zum Bereitstellen von Information über eine Hardware-Adresse eines Mobilgeräts 200 für ein Fahrzeug 150. Das Verfahren umfasst Erhalten 62 der Information über die Hardware-Adresse des Mobilgeräts 200 von dem Mobilgerät 200 oder von einem weiteren Fahrzeug 160. Das Verfahren umfasst ferner Speichern 64 der Information über die Hardware-Adresse. Das Verfahren umfasst ferner Bereitstellen 66 der Information über die Hardware-Adresse des Mobilgeräts 200 für das Fahrzeug 150.

Fig. 7 illustriert ein Flussdiagramm eines Ausführungsbeispiels eines Verfahrens für ein Mobilgerät 200, zum Bereitstellen von Information über eine Hardware-Adresse des Mobilgeräts 200 für ein Informationssystem 100 eines Fahrzeugs 150 über einen Server 300 in einem Netzwerk, Das Verfahren umfasst Bestimmen 52 der Information über die Hardware-Adresse basierend auf der Hardware-Adresse des Mobilgeräts 200. Das Verfahren umfasst ferner Bereitstellen 54 der Information über die Hardware-Adresse für den Server.

Ein weiteres Ausführungsbeispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Ein weiteres Ausführungsbeispiele ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 10: Vorrichtung für ein Informationssystem eines Fahrzeugs
- 12: Kommunikationsmodul
- 14: Kontrollmodul
- 20: Vorrichtung für ein Mobilgerät
- 22: Kommunikationsmodul
- 24: Kontrollmodul
- 30: Vorrichtung für einen Server in einem Netzwerk
- 32: Kommunikationsmodul
- 34: Kontrollmodul
- 36: Speichermodul
- 42: Erhalten
- 44: Detektieren
- 46: Initiieren
- 48: Herstellen
- 52: Bestimmen
- 54: Bereitstellen
- 62: Erhalten
- 64: Speichern
- 66: Bereitstellen
- 100: Informationssystem
- 150: Fahrzeug
- 200: Mobilgerät
- 300: Server
- 2000: Mobilgerät
- 2000a: Hardware-Adresse des Mobilgeräts
- 2002: Informationssystem eines Fahrzeugs
- 2002a: Hardware-Adresse des Informationssystems des Fahrzeugs
- 2004: Informationssystem eines Fahrzeugs
- 2004a: Hardware-Adresse des Informationssystems des Fahrzeugs
- 2010: Einstellungen
- 2020a: Ein oder mehrere Hardware-Adressen und Link-IDs des Informationssystems des Fahrzeugs
- 2020b: Pairing-Geräte des Mobilgeräts
- 2022a: Ein oder mehrere Hardware-Adressen
- 2024a: Ein oder mehrere Hardware-Adressen mit gespeicherter Link-ID für Pairing zu Mobilgerät
- 2024b: Aktualisierte Pairing-Geräte des Mobilgeräts
- 2030a: Ein oder mehrere Hardware-Adressen
- 2030a: Pairing-Geräte des Mobilgeräts
- 2032a: Ein oder mehrere Hardware-Adressen mit gespeicherter Link-ID für Pairing zu Mobilgerät
- 2032b: Aktualisierte Pairing-Geräte des Mobilgeräts

## Patentansprüche

1. Vorrichtung (10) für ein Informationssystem (100) eines Fahrzeugs (150), zum Herstellen einer Kommunikationsverbindung mit einem Mobilgerät (200), umfassend
ein Kommunikationsmodul (12), wobei das Kommunikationsmodul (12) ausgebildet ist, über ein Kommunikationsprotokoll mit dem Mobilgerät (200) zu kommunizieren; und
ein Kontrollmodul (14), ausgebildet zum:
Steuern des Kommunikationsmoduls (12),
Erhalten von Information über eine Hardware-Adresse des Mobilgeräts (200) und Meta-Information die einen Zeitpunkt der letzten Verwendung oder eine Häufigkeit der Verwendung umfassen,
Detektieren der Hardware-Adresse des Mobilgeräts (200) über das Kommunikationsmodul (12) basierend auf der Information über die Hardware-Adresse,
Initiieren einer Kopplung des Mobilgeräts (200) mit dem Informationssystem (100) basierend auf der Hardware-Adresse des Mobilgeräts (200) und der Meta-Information, und
Herstellen der Kommunikationsverbindung mit dem Mobilgerät (200) basierend auf der Kopplung.

2. Die Vorrichtung (10) gemäß Anspruch 1, wobei das Kommunikationsmodul (12) zumindest zwei Sende-Empfangsmodule umfasst, und wobei das Erhalten der Information über die Hardware-Adresse und die Kommunikationsverbindung mit dem Mobilgerät (200) auf unterschiedlichen Sende-Empfangsmodulen der zumindest zwei Sende-Empfangsmodule basiert.

3. Die Vorrichtung (10) gemäß einem der vorhergehenden Ansprüche, wobei das Kommunikationsmodul (12) ausgebildet ist, in einem Netzwerk zu kommunizieren, und wobei das Kontrollmodul (14) ausgebildet ist, die Information über die Hardware-Adresse von einem Server im Netzwerk zu erhalten.

4. Die Vorrichtung (10) gemäß Anspruch 3,
wobei das Kontrollmodul (14) ausgebildet ist, die Information über die Hardware-Adresse von einem weiteren Fahrzeug über den Server (300) zu erhalten,
und/oder wobei das Kontrollmodul (14) ausgebildet ist, die Information über die Hardware-Adresse von dem Mobilgerät (200) über den Server (300) zu erhalten,
und/oder wobei das Kontrollmodul (14) ausgebildet ist, Information über ein oder mehrere Hardware-Adressen von mit dem Informationssystem (100) gekoppelten Mobilgeräten zu bestimmen und dem Server (300) bereitzustellen.

5. Die Vorrichtung (10) gemäß einem der vorhergehenden Ansprüche, wobei die Hardware-Adresse einer Wireless Local Access Network, WLAN, Medium Access Control, MAC,-Adresse, oder einer Bluetooth-MAC-Adresse entspricht.

6. Die Vorrichtung (10) gemäß einem der vorhergehenden Ansprüche, wobei das Kontrollmodul (14) ausgebildet ist, basierend auf der Information über die Hardwareadresse zu bestimmen, ob das Informationssystem (100) mit dem Mobilgerät (200) gekoppelt ist, und wobei das Kontrollmodul (14) ausgebildet ist, die Kopplung basierend darauf zu initiieren, ob das Informationssystem (100) mit dem Mobilgerät (200) gekoppelt ist.

7. Die Vorrichtung (10) gemäß einem der vorhergehenden Ansprüche, wobei das Kontrollmodul (14) ausgebildet ist, Information über ein oder mehrere Hardware-Adressen zu erhalten, wobei die Hardware-Adresse des Mobilgeräts (200) in der Information über die ein oder mehreren Hardware-Adressen umfasst ist, und wobei das Kontrollmodul (14) ausgebildet ist, die Hardware-Adresse des Mobilgeräts (200) basierend auf der Information über die ein oder mehreren Hardware-Adressen zu detektieren.

8. Verfahren für ein Informationssystem (100) eines Fahrzeugs (150), zum Herstellen einer Kommunikationsverbindung mit einem Mobilgerät (200), wobei ein Kommunikationsmodul des Informationssystems ausgebildet ist, um über ein Kommunikationsprotokoll mit dem Mobilgerät (200) zu kommunizieren, das Verfahren umfassend
Erhalten (42) von Information über eine Hardware-Adresse des Mobilgeräts (200) und Meta-Information die einen Zeitpunkt der letzten Verwendung oder eine Häufigkeit der Verwendung umfassen;
Detektieren (44) der Hardware-Adresse des Mobilgeräts (200) basierend auf der Information über die Hardware-Adresse;
Initiieren (46) einer Kopplung des Mobilgeräts (200) mit dem Informationssystem (100) basierend auf der Hardware-Adresse des Mobilgeräts (200) und der Meta-Information; und
Herstellen (48) der Kommunikationsverbindung mit dem Mobilgerät (200) basierend auf der Kopplung.

9. Programm mit einem Programmcode zum Durchführen des Verfahrens nach Anspruch 8 wenn der Programmcode auf einem Computer, einem Prozessor, einem Kontrollmodul oder einer programmierbaren Hardwarekomponente ausgeführt wird.

## Claims

1. Device (10) for an information system (100) of a vehicle (150), for establishing a communication connection with a mobile device (200), comprising
a communication module (12), wherein the communication module (12) is designed to communicate with the mobile device (200) via a communication protocol; and
a control module (14), designed to:
control the communication module (12),
receive information about a hardware address of the mobile device (200) and metainformation that comprises a last usage time or a usage frequency,
detect the hardware address of the mobile device (200) via the communication module (12) based on the information about the hardware address,
initiate coupling of the mobile device (200) with the information system (100) based on the hardware address of the mobile device (200) and the metainformation, and
establish the communication connection with the mobile device (200) based on the coupling.

2. Device (10) according to Claim 1, wherein the communication module (12) comprises at least two transceiver modules, and wherein the reception of the information about the hardware address and the communication connection with the mobile device (200) are based on different transceiver modules of the at least two transceiver modules.

3. Device (10) according to either of the preceding claims, wherein the communication module (12) is designed to communicate in a network, and wherein the control module (14) is designed to receive the information about the hardware address from a server in the network.

4. Device (10) according to Claim 3,
wherein the control module (14) is designed to receive the information about the hardware address from a further vehicle via the server (300),
and/or wherein the control module (14) is designed to receive the information about the hardware address from the mobile device (200) via the server (300),
and/or wherein the control module (14) is designed to determine information about one or more hardware addresses of mobile devices coupled to the information system (100) and to provide said information to the server (300).

5. Device (10) according to one of the preceding claims, wherein the hardware address corresponds to a wireless local area network, WLAN, media access control, MAC, address, or a Bluetooth MAC address.

6. Device (10) according to one of the preceding claims, wherein the control module (14) is designed, based on the information about the hardware address, to determine whether the information system (100) is coupled to the mobile device (200), and wherein the control module (14) is designed to initiate the coupling based on whether the information system (100) is coupled to the mobile device (200).

7. Device (10) according to one of the preceding claims, wherein the control module (14) is designed to receive information about one or more hardware addresses, wherein the hardware address of the mobile device (200) is contained in the information about the one or more hardware addresses, and wherein the control module (14) is designed to detect the hardware address of the mobile device (200) based on the information about the one or more hardware addresses.

8. Method for an information system (100) of a vehicle (150) for establishing a communication connection with a mobile device (200), wherein a communication module of the information system is designed to communicate with the mobile device (200) via a communication protocol, the method comprising
receiving (42) information about a hardware address of the mobile device (200) and metainformation that comprises a last usage time or a usage frequency;
detecting (44) the hardware address of the mobile device (200) based on the information about the hardware address;
initiating (46) coupling of the mobile device (200) with the information system (100) based on the hardware address of the mobile device (200) and the metainformation; and
establishing (48) the communication connection with the mobile device (200) based on the coupling.

9. Program containing a program code for performing the method according to Claim 8 when the program code is executed on a computer, a processor, a control module or a programmable hardware component.

## Revendications

1. Dispositif (10) pour un système d'information (100) d'un véhicule (150), servant à établir une liaison de communication avec un appareil mobile (200), comprenant un module de communication (12), le module de communication (12) étant configuré pour communiquer avec l'appareil mobile (200) par le biais d'un protocole de communication ; et
un module de contrôle (14), configuré pour :
commander le module de communication (12),
obtenir des informations à propos d'une adresse physique de l'appareil mobile (200) et des méta-informations qui comprennent un instant de la dernière utilisation ou une fréquence d'utilisation,
détecter l'adresse physique de l'appareil mobile (200) par le biais du module de communication (12) en se basant sur les informations à propos de l'adresse physique,
initier un couplage de l'appareil mobile (200) avec le système d'information (100) en se basant sur l'adresse physique de l'appareil mobile (200) et des méta-informations, et
établir la liaison de communication avec l'appareil mobile (200) en se basant sur le couplage.

2. Dispositif (10) selon la revendication 1, le module de communication (12) comportant au moins deux modules d'émission-réception, et l'obtention des informations à propos de l'adresse physique et la liaison de communication avec l'appareil mobile (200) se basant sur des modules d'émission-réception différents des au moins deux modules d'émission-réception.

3. Dispositif (10) selon l'une des revendications précédentes, le module de communication (12) étant configuré pour communiquer dans un réseau, et le module de contrôle (14) étant configuré pour obtenir les informations à propos de l'adresse physique de la part d'un serveur dans le réseau.

4. Dispositif (10) selon la revendication 3, le module de contrôle (14) étant configuré pour obtenir les informations à propos de l'adresse physique de la part d'un autre véhicule par le biais du serveur (300),
et/ou le module de contrôle (14) étant configuré pour obtenir les informations à propos de l'adresse physique de la part de l'appareil mobile (200) par le biais du serveur (300),
et/ou le module de contrôle (14) étant configuré pour déterminer les informations à propos d'une ou plusieurs adresses physiques d'appareils mobiles couplés avec le système d'information (100) et les mettre à la disposition du serveur (300).

5. Dispositif (10) selon l'une des revendications précédentes, l'adresse physique correspondant à une adresse de commande d'accès au support, MAC, de réseau local sans fil, WLAN, ou à une adresse MAC Bluetooth.

6. Dispositif (10) selon l'une des revendications précédentes, le module de contrôle (14) étant configuré pour déterminer, en se basant sur les informations à propos de l'adresse physique, si le système d'information (100) est couplé avec l'appareil mobile (200), et le module de contrôle (14) étant configuré pour initier le couplage en se basant sur le fait que le système d'information (100) est couplé avec l'appareil mobile (200) .

7. Dispositif (10) selon l'une des revendications précédentes, le module de contrôle (14) étant configuré pour obtenir des informations à propos d'une ou plusieurs adresses physiques, l'adresse physique de l'appareil mobile (200) étant comprise dans les informations à propos d'une ou de plusieurs adresses physiques, et le module de contrôle (14) étant configuré pour détecter l'adresse physique de l'appareil mobile (200) en se basant sur les informations à propos de ladite ou des plusieurs adresses physiques.

8. Procédé pour un système d'information (100) d'un véhicule (150), servant à établir une liaison de communication avec un appareil mobile (200), un module de communication du système d'information étant configuré pour communiquer avec l'appareil mobile (200) par le biais d'un protocole de communication, le procédé comprenant
l'obtention (42) d'informations à propos d'une adresse physique de l'appareil mobile (200) et de méta-informations qui comprennent un instant de la dernière utilisation ou une fréquence d'utilisation ;
la détection (44) de l'adresse physique de l'appareil mobile (200) en se basant sur les informations à propos de l'adresse physique ;
l'initiation (46) d'un couplage de l'appareil mobile (200) avec le système d'information (100) en se basant sur l'adresse physique de l'appareil mobile (200) et les méta-informations ; et
l'établissement (48) de la liaison de communication avec l'appareil mobile (200) en se basant sur le couplage.

9. Programme comprenant un code de programme destiné à mettre en œuvre le procédé selon la revendication 8 lorsque le code de programme est exécuté sur un ordinateur, un processeur, un module de contrôle ou un composant matériel programmable.
